# EUROPEAN PATENT APPLICATION

(11) **EP 4 782 507 A1**
(43) Date of publication of application: **29.07.2026**
(21) Application number: 26153464.8
(22) Date of filing: 22.01.2026
(51) Int. Cl.: C09D 11/328, C09D 11/14, C09D 11/38

(54) **AQUEOUS INK, AND INKJET RECORDING DEVICE**

(30) Priority: 24.01.2025 JP 2025010662
(71) Applicant: BROTHER KOGYO KABUSHIKI KAISHA, Aichi-ken 467-8561 (JP)
(72) Inventor: NISHIDA, Satoshi, Nagoya, 467-8562 (JP); ISOGAI, Masato, Nagoya, 467-8562 (JP); TSUZAKA, Yuka, Nagoya, 467-8562 (JP)
(74) Representative: Kuhnen & Wacker Patent- und Rechtsanwaltsbüro PartG mbB

(57) **Abstract**

An aqueous ink for inkjet recording includes gardenia yellow coloring agent, a watersoluble organic solvent, cyclodextrins, and water. The cyclodextrins include seven or more glucose molecules and have a solubility in water at 25°C of 30 g/100 mL or more.

## Description

### TECHNICAL FIELD

The present invention relates to aqueous ink for inkjet recording and inkjet recording devices.

### BACKGROUND ART

JP Patent Application Publication No. 2023-128719 discloses an aqueous inkjet ink composition capable of reducing environmental impact by using biological source materials.

### DESCRIPTION

The present specification discloses a technology capable of achieving both a reduction in environmental impact and an improvement in the stability of the colorant.

The present specification discloses an aqueous ink for inkjet recording. This aqueous ink for inkjet recording includes gardenia yellow coloring agent, a water-soluble organic solvent, cyclodextrins, and water. The cyclodextrins include seven or more glucose molecules and have a solubility in water at 25°C of 30 g/100 mL or more.

Since this aqueous ink for inkjet recording uses gardenia yellow coloring agent as the colorant, it is possible to reduce environmental impact compared to inks that use petroleum-derived colorants. Furthermore, this aqueous ink for inkjet recording includes cyclodextrins. Cyclodextrins are compounds that form a cyclic structure and can include other molecular species within the cavity formed therein. In this aqueous ink for inkjet recording, the cyclodextrins include seven or more glucose molecules. Therefore, the cyclodextrins form cavities of appropriate size, allowing the inclusion of gardenia yellow coloring agent within the cavities. As a result, the decomposition of gardenia yellow coloring agent by light, heat, or the like can be suppressed. In addition, since the cyclodextrins have relatively high water solubility, the cyclodextrins including the gardenia yellow coloring agent can be suitably dissolved and stabilized in the aqueous ink. Thus, high stability of the colorant can be achieved.

In addition, the inkjet recording device is also novel and useful. The inkjet recording device includes an ink reservoir, an ink ejection unit, and the aqueous ink for inkjet recording stored in the ink reservoir. The aqueous ink for inkjet recording includes gardenia yellow coloring agent, a water-soluble organic solvent, cyclodextrins, and water. The cyclodextrins include seven or more glucose molecules and have a solubility in water at 25°C of 30 g/100 mL or more.
FIG. 1 illustrates the configuration of the inkjet recording device.
FIG. 2 is a table 1 that indicates aqueous ink compositions and evaluation results for Examples.
FIG. 3 is a table 2 that indicates aqueous ink compositions and evaluation results for Comparative Examples.

### (Configuration of Recording Device 10)

With reference to the drawings, a recording device 10 according to the embodiment will be described. The recording device 10 is a device that ejects aqueous ink toward a recording medium P in accordance with the inkjet recording method, thereby recording an image on the recording medium P. The recording device 10 is used while being placed on a tabletop. However, in other embodiments, the recording device 10 may be used while being placed on a floor or a rack.

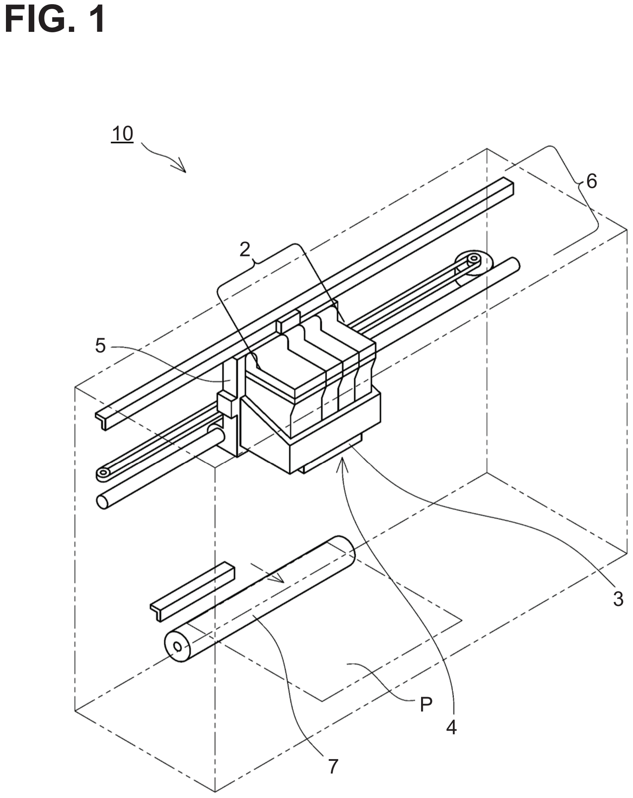

As shown in FIG. 1, the recording device 10 includes, as its main components, four ink cartridges 2, an inkjet head 3, a head unit 4, a carriage 5, a drive unit 6, and a platen roller 7.

The four ink cartridges 2 each contain one of the four colors of aqueous ink: yellow, magenta, cyan, and black. In this embodiment, a set of four ink cartridges 2 is shown, but in a variation, an integrated ink cartridge with internal partitions forming compartments for aqueous yellow ink, aqueous magenta ink, aqueous cyan ink, and aqueous black ink may be used. The ink cartridge body may be any conventionally known type.

The inkjet head 3 is installed on the head unit 4. The inkjet head 3 performs image recording on the recording medium P. The four ink cartridges 2 and the head unit 4 are mounted on the carriage 5. The drive unit 6 reciprocates the carriage 5 in a linear direction. As the drive unit 6, for example, any conventionally known type may be used. The platen roller 7 extends in the reciprocating direction of the carriage 5 and is disposed facing the inkjet head 3.

The inkjet head 3 has a configuration such that a plurality of metal thin plates are stacked in multiple layers. Each of the thin plates is formed with through-holes. By stacking multiple layers of thin plates with through-holes, flow paths for the circulation of aqueous ink are formed. Each of the thin plates is, for example, bonded by an adhesive.

In the recording device 10 of the present embodiment, the four ink cartridges 2 are mounted, together with the head unit 4, on a single carriage 5. However, each of the four ink cartridges 2 may be mounted on a carriage separate from the head unit 4. Furthermore, each of the four ink cartridges 2 may be arranged and fixed within the recording device 10, without being mounted on the carriage 5. In such a case, for example, each of the four ink cartridges 2 and the head unit 4 mounted on the carriage 5 are connected by a tube or the like, whereby aqueous ink is supplied from each ink cartridge to the head unit 4. Moreover, in the present embodiment, four ink bottles having a bottle shape may be used in place of the four ink cartridges 2. In this case, each ink bottle may be provided with an inlet for injecting ink from the outside into the interior.

Inkjet recording using the recording device 10 is performed as follows. First, the recording paper P is fed from a paper feed cassette in the recording device 10. The recording paper P is conveyed between the inkjet head 3 and the platen roller 7. A predetermined image is recorded on the conveyed recording paper P by ejecting aqueous ink from the inkjet head 3. The recording paper P on which the image has been recorded is discharged from the recording device 10. It should be noted that, in FIG. 1, the paper feeding mechanism and the paper discharging mechanism for the recording paper P are not illustrated.

Although the recording device 10 shown in FIG. 1 uses a serial-type inkjet head, the recording device 10 may also be an device that uses a line-type inkjet head, a roll-to-roll system, or the like.

### (Aqueous Ink for Inkjet Recording)

The aqueous ink for inkjet recording disclosed in this specification is yellow among the four colors of yellow, magenta, cyan, and black. For magenta, cyan, and black, known inks can be used as appropriate. Hereinafter, the yellow aqueous ink will be described in detail.

### (Details of Yellow Aqueous Ink)

The yellow aqueous ink includes a colorant, a water-soluble organic solvent, cyclodextrins, and water. The colorant, water-soluble organic solvent, and cyclodextrins are dissolved or dispersed in water.

### (Colorant)

The colorant is a biological source colorant, and specifically, it is a gardenia yellow coloring agent. Here, "biological source" means plant-derived or animal-derived, and biological source components include not only components that can be directly obtained from plants or animals, but also derivatives of such components. Although substances derived from fossil fuels such as petroleum could, in a broad sense, be considered biological sources if traced back to their origin, in this specification, substances derived from fossil fuels are not included as biological sources.

An amount of gardenia yellow coloring agent relative to the total amount of the yellow aqueous ink is not particularly limited. The lower limit of the amount may be, for example, 0.1 mass% or more, 0.5 mass% or more, 1.0 mass% or more, or 2.0 mass% or more. The upper limit of the amount may be, for example, 20.0 mass% or less, 15.0 mass% or less, 10.0 mass% or less, or 5.0 mass% or less. The range of the amount can be set by appropriately combining the above-mentioned upper and lower limits; for example, 0.1 mass% or more and 20.0 mass% or less, 0.5 mass% or more and 15.0 mass% or less, 1.0 mass% or more and 10.0 mass% or less, or 2.0 mass% or more and 5.0 mass% or less. When the amount of gardenia yellow coloring agent is within the above range, high stability can be achieved.

### (Water-Soluble Organic Solvent)

The water-soluble organic solvent is not particularly limited, and any substance having the property of being soluble in water can be used. Examples of water-soluble organic solvents may include glycerin, ethylene glycol, propylene glycol, butylene glycol, hexylene glycol, diethylene glycol, triethylene glycol, polyethylene glycol, dipropylene glycol, tripropylene glycol, polypropylene glycol, 1,3-propanediol, 1,2-butanediol, 1,2-hexanediol, 1,6-hexanediol, 1,2,6-hexanetriol, thioglycol, and glycol ethers having a propylene oxide group. Other examples of water-soluble organic solvents may include alkyl alcohols with 1 to 4 carbon atoms, such as methyl alcohol, ethyl alcohol, n-propyl alcohol, isopropyl alcohol, n-butyl alcohol, sec-butyl alcohol, isobutyl alcohol, and tert-butyl alcohol. Furthermore, lower alkyl ethers of alkylene glycols such as ethylene glycol monomethyl (or ethyl, propyl, butyl) ether, diethylene glycol monomethyl (or ethyl, propyl, butyl) ether, triethylene glycol monomethyl (or ethyl, propyl, butyl, hexyl) ether, tetraethylene glycol monomethyl (or ethyl, propyl, butyl, hexyl) ether, propylene glycol monomethyl (or ethyl, propyl, butyl) ether, dipropylene glycol monomethyl (or ethyl, propyl, butyl) ether, propylene glycol monopropyl ether, dipropylene glycol monopropyl ether, tripropylene glycol monomethyl (or ethyl, propyl, butyl) ether, and tetrapropylene glycol monomethyl (or ethyl) ether can be used. In addition, N-methyl-2-pyrrolidone, 2-pyrrolidone, and 1,3-dimethyl-2-imidazolidinone can be used. Among these, from the viewpoint of further reducing environmental impact, biological source water-soluble organic solvents may be preferred; for example, glycerin may be preferable.

An amount of the water-soluble organic solvent relative to the total amount of the yellow aqueous ink is not particularly limited. The lower limit of the amount may be, for example, 1.0 mass% or more, 3.0 mass% or more, 5.0 mass% or more, or 10.0 mass% or more. The upper limit of the amount may be, for example, 30.0 mass% or less, 25.0 mass% or less, 20.0 mass% or less, or 15.0 mass% or less. The range of the amount can be set by appropriately combining the above-mentioned upper and lower limits; for example, 1.0 mass% or more and 30.0 mass% or less, 3.0 mass% or more and 25.0 mass% or less, 5.0 mass% or more and 20.0 mass% or less, or 10.0 mass% or more and 15.0 mass% or less.

### (Cyclodextrins)

Cyclodextrins are compounds of biological source and are incorporated in the yellow aqueous ink to suppress the decomposition of gardenia yellow coloring agent. Cyclodextrins are compounds in which multiple glucose molecules are joined by glycosidic bonds to form a cyclic structure. Cyclodextrins have a cavity inside their cyclic structure, and can include other molecular species within the cavity if their shape and dimensions are compatible. By encapsulating gardenia yellow coloring agent within cyclodextrins, the gardenia yellow coloring agent is stabilized, and its decomposition due to light, heat, and the like can be suppressed.

The cyclodextrins herein include seven or more glucose molecules. That is, cyclodextrins containing six or fewer glucose molecules are not included in the cyclodextrins of the present disclosure. For example, α-cyclodextrin, which contains six glucose molecules, is not included. It is considered that cyclodextrins containing seven or more glucose molecules can form an appropriate cavity for encapsulating gardenia yellow coloring agent. The appropriate cavity for encapsulating gardenia yellow coloring agent has an inner diameter of about 0.6 nm or more.

The cyclodextrins herein have relatively high water solubility. Specifically, the cyclodextrins have a solubility in water at 25°C of 30 g/100 mL or more. Accordingly, cyclodextrins can suitably dissolve in the aqueous ink while encapsulating gardenia yellow coloring agent. Generally, cyclodextrins such as β-cyclodextrin and γ-cyclodextrin have a solubility in water at 25°C of less than 30 g/100 mL. Therefore, in the present disclosure, the cyclodextrins have hydroxyl groups substituted with other groups to improve water solubility. The substituent is not particularly limited, but may be, for example, a hydroxypropyl group. In this case, for example, the hydroxyl groups at the 2, 3, and 6 positions of the glucose skeleton of the cyclodextrin may be randomly substituted with hydroxypropyl groups. When the substituent is a hydroxypropyl group, the average degree of substitution is not particularly limited, but may be, for example, 2 or more and 12 or less, 4 or more and 10 or less, or 6 or more and 8 or less. The type of substituent and the average degree of substitution may be selected as appropriate as long as the solubility in water satisfies the above value.

As described above, the cyclodextrins include seven or more glucose molecules and are not particularly limited as long as they satisfy the above-mentioned water solubility; examples may include hydroxypropyl-β-cyclodextrin and hydroxypropyl-γ-cyclodextrin.

### (Water)

It may be preferable that the water is ion-exchanged water or purified water. An amount of water relative to the total amount of the yellow aqueous ink is appropriately determined according to the desired ink properties and the like. The amount of water may be, for example, 15.0 mass% or more and 95.0 mass% or less, or 25.0 mass% or more and 85.0 mass% or less. The amount of water may also be a balance of the other components.

### (Other Components)

The yellow aqueous ink may further include a surfactant. The surfactant is not particularly limited and may be appropriately selected according to the intended purpose; for example, commercially available products may be used. Specifically, examples of surfactants may include silicone-based surfactants and acetylene-based surfactants. In particular, since silicone-based surfactants do not contain impurities such as ethylene oxide, the use of silicone-based surfactants as the surfactant can further reduce the generation of Volatile Organic Compounds (VOCs).

Examples of commercially available silicone-based surfactants may include "SILFACE^{®} SAG002," "SILFACE^{®} SAG005," and "SILFACE^{®} SAG503A," from Nissin Chemical Industry Co., Ltd.

Examples of commercially available acetylene-based surfactants may include "OLPHIN^{®} E1004," "OLPHIN^{®} E1008," and "OLPHIN^{®} E1010," from Nissin Chemical Industry Co., Ltd.; "SURFYNOL^{®} 440," "SURFYNOL^{®} 465," and "SURFYNOL^{®} 485," from Evonik Industries; and "ACETYLENOL^{®} E40" and "ACETYLENOL^{®} E100," from Kawaken Fine Chemicals Co., Ltd.

In addition to or in place of silicone-based surfactants and acetylene-based surfactants, the yellow aqueous ink may also include other surfactants. Examples of other surfactants may include nonionic surfactants such as the "EMULGEN^{®}," "RHEODOL^{®}," "EMASOL^{®}," "EXCEL^{®}," "EMANON^{®}," "AMIET^{®}," and "AMINON^{®}" series from Kao Corporation; the "SORBON^{®}" series from Toho Chemical Industry Co., Ltd.; the "DOBANOX^{®}," "LEOCOL^{®}," "LEOX^{®}," "LAOL, LEOCOL^{®}," "LIONOL^{®}," "CADENAX^{®}," "LIONON^{®}," and "LEOFAT^{®}" series from Lion Corporation; the "Genapol^{®}" and "Genagen^{®}" series from Clariant AG; anionic surfactants such as the "EMAL^{®}," "LATEMUL^{®}," "VENOL^{®}," "NEOPELEX^{®}," "NSSOAP", "KSSOAP", "OSSOAP", and "PELEX^{®}" series from Kao Corporation; the "LIPOLAN^{®}," "LIPON^{®}," "SUNNOL^{®}," "LIPOTAC^{®} TE, ENAGICOL" series, "LIPAL^{®}," and "LOTAT^{®}" series from Lion Corporation; and cationic surfactants such as "Catiogen^{®} ES-OW" and "Catiogen^{®} ES-L" from Daiichi Kogyo Seiyaku Co., Ltd. Among the above surfactants, those derived from biological sources may be preferred from the viewpoint of further reducing environmental impact; for example, the "Genapol" and "Genagen" series may be preferred.

The surfactant may be used alone or in combination of two or more types. An amount of the surfactant relative to the total amount of the yellow aqueous ink may be appropriately selected according to the intended purpose. The amount may be, for example, 0.1 mass% or more and 5.0 mass% or less, 0.5 mass% or more and 3.5 mass% or less, or 1.0 mass% or more and 3.0 mass% or less.

The yellow aqueous ink may further include conventional additives as needed. Examples of additives may include pH adjusters, viscosity modifiers, surface tension modifiers, antifungal agents, and the like. Examples of viscosity modifiers may include polyvinyl alcohol, cellulose, and water-soluble resins.

The yellow aqueous ink can be prepared by uniformly mixing the colorant, water-soluble organic solvent, cyclodextrins, water, and other additives as necessary by conventional methods, and removing insoluble substances by filtration or the like.

Next, the yellow aqueous ink disclosed in the present specification will be specifically described by way of Examples and Comparative Examples. However, the technology disclosed herein is not limited in any way to these Examples.

### (Preparation of Yellow Aqueous Ink)

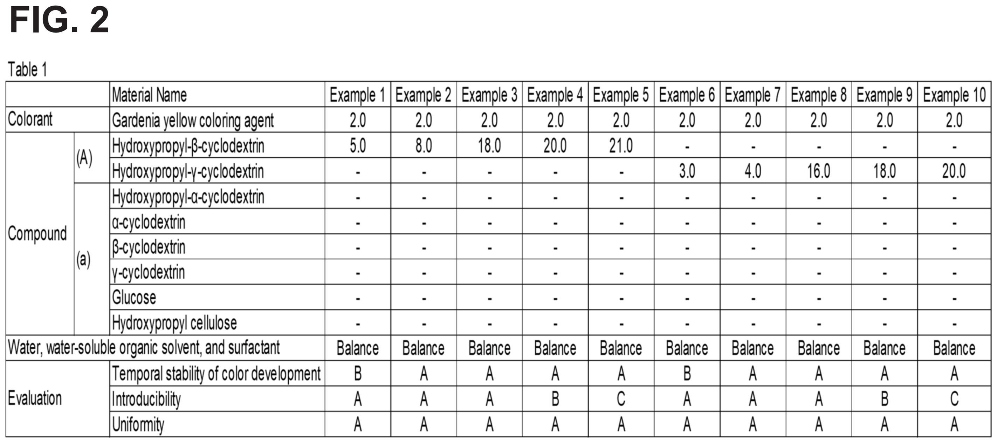

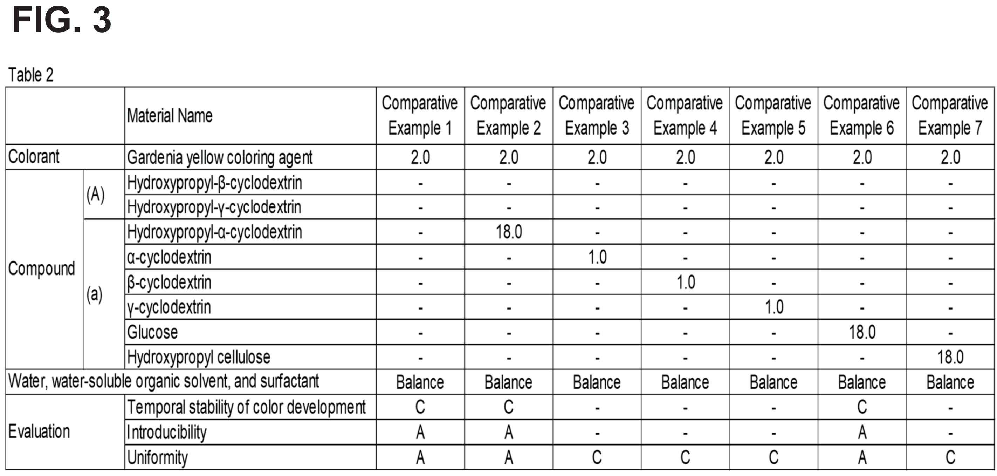

Table 1 in FIG. 2 shows aqueous ink compositions and evaluation results for Examples 1 to 10. Table 2 in FIG. 3 shows aqueous ink compositions and evaluation results for Comparative Examples 1 to 7. It should be noted that the numerical values in the columns indicating each component in the tables represent the amount of the respective component relative to the total amount of each aqueous ink, and the unit is mass%.

Using each of the prepared aqueous inks, the temporal stability of color development, the introducibility of the ink, and the uniformity of the ink are evaluated in accordance with the methods described below.

### (Evaluation of Temporal Stability of Color Development)

Five grams of each prepared aqueous ink are measured into a glass bottle and stored in a thermostatic chamber at 60°C for three days. Each aqueous ink, both before and after storage, is diluted 1,000-fold with purified water, and absorbance is measured. The peak top values of the absorbance spectra obtained from the aqueous ink before and after storage are extracted, and the rate of change of the value after storage relative to the value before storage is calculated. The temporal stability of color development is evaluated according to the following criteria. The evaluation results are shown in Tables 1 and 2. It should be noted that, for Comparative Examples 3 to 5 and 7, separation occurs during mixing of the components, making absorbance measurement impossible; therefore, temporal stability of color development is not evaluated. The same applies to the evaluation of introducibility of the ink described below.
A: Rate of change in absorbance is less than 25%
B: Rate of change in absorbance is 25% or more and less than 35%
C: Rate of change in absorbance is 35% or more

### (Evaluation of Ink Introducibility)

For each prepared aqueous ink, the yellow aqueous ink is filled into the inkjet head by performing two suction operations. Subsequently, a nozzle check pattern is printed on plain paper. Based on the nozzle check pattern printed on the plain paper, the number of normal channels that ejects ink correctly from the nozzles is counted, and the ratio of normal channels to the total number of channels is calculated. The introducibility of the ink is evaluated according to the following criteria. The evaluation results are shown in Tables 1 and 2.
A: Ink is ejected from all nozzles
B: Ink is ejected from 95% or more of the nozzles
C: Ink is ejected from less than 95% of the nozzles

### (Evaluation of Ink Uniformity)

Each prepared aqueous ink is mixed using a magnetic stirrer for 15 minutes or more. The uniformity of the ink after mixing is visually evaluated according to the following criteria. The evaluation results are shown in Tables 1 and 2.
A: No separation
C: Separation observed

As shown in Tables 1 and 2, Examples 1 to 10 exhibits excellent temporal stability of color development.

In contrast, Comparative Example 1 does not include component (A), that is, the cyclodextrin described herein. As a result, the gardenia yellow coloring agent is exposed to heat and light and decomposed, leading to fading and a significant decrease in absorbance, which is considered to have resulted in low temporal stability of color development.

In Comparative Example 2, component (A) is replaced with component (a), specifically hydroxypropyl-α-cyclodextrin. Hydroxypropyl-α-cyclodextrin has a cyclic structure composed of six glucose molecules. Therefore, compared to component (A), the cavity inside the cyclic structure is smaller, and the gardenia yellow coloring agent is not included in the cavity, resulting in its decomposition upon exposure to heat and light.

In Comparative Examples 3 to 5, component (A) is replaced with component (a), specifically α-cyclodextrin, β-cyclodextrin, and γ-cyclodextrin, respectively. Since these compounds are not hydroxypropylated, their water solubility is lower compared to component (A). The water solubility of α-cyclodextrin is approximately 13 g/100 mL at 25°C, that of β-cyclodextrin is approximately 1.9 g/100 mL at 25°C, and that of γ-cyclodextrin is approximately 26 g/100 mL at 25°C. Consequently, these cyclodextrins do not dissolve in the aqueous ink, resulting in separation. These results indicate that cyclodextrins with sufficiently high water solubility may be preferred for functioning as yellow aqueous ink.

In Comparative Example 6, component (A) is replaced with component (a), specifically glucose. As glucose is a monosaccharide, the inclusion effect described above is not obtained, and the gardenia yellow coloring agent is considered to have decomposed upon exposure to heat and light.

In Comparative Example 7, component (A) is replaced with component (a), specifically hydroxypropyl cellulose. Since hydroxypropyl cellulose is a linear polymer, it does not exhibit the inclusion effect described above. Furthermore, because hydroxypropyl cellulose has a large molecular weight, when added in an amount equivalent to Example 3 (18.0 mass%), it does not dissolve in the aqueous ink and gelation occurs. Therefore, it is considered that it does not function as yellow aqueous ink.

Furthermore, when comparing the respective Examples, Examples 1 to 5 have a common composition except for the difference in the amount of hydroxypropyl-β-cyclodextrin, and Examples 6 to 10 have a common composition except for the difference in the amount of hydroxypropyl-γ-cyclodextrin. As shown in Examples 1 to 5 and Examples 6 to 10, a higher amount of cyclodextrins leads to improved temporal stability of color development. This is considered to be because the number of cavities available for inclusion of the gardenia yellow coloring agent increases, making it easier for the coloring agent to be encapsulated. On the other hand, it is found that when the amount of component (A) is relatively high, the introducibility of the ink may decrease. This is considered to be due to the bulky nature of cyclodextrins and various interactions occurring among the cyclodextrin molecules. During the introduction of aqueous ink into the inkjet head, the ink flows through narrow flow paths. Therefore, when the aqueous ink contains a large amount of cyclodextrins, the aforementioned interactions become significant, and local fluidity may decrease. As a result, the introducibility of the ink is considered to have deteriorated.

The specific examples of the present invention have been described in detail above; however, these are merely illustrative and are not intended to limit the scope of the claims. The technical scope described in the claims encompasses various modifications and alterations of the above-exemplified embodiments.

Furthermore, the technical elements described in this specification or the drawings may exhibit technical utility either individually or in various combinations, and are not limited to the combinations described in the claims at the time of filing. Additionally, the technologies exemplified in this specification or the drawings may achieve multiple objectives simultaneously, and the achievement of any one of these objectives alone is technically useful.

Even if a claim is dependent only on certain claims in the claims at the time of filing of this patent application, the claim is not limited to being dependent only on those specific claims. To the extent that there is no technical inconsistency, each claim may be dependent on other claims not originally indicated as dependent claims at the time of filing. That is, the technologies of the respective claims can be variously combined as follows.

(Item 1) An aqueous ink for inkjet recording comprising gardenia yellow coloring agent, a water-soluble organic solvent, cyclodextrins; and water, wherein the cyclodextrins include seven or more glucose molecules and have a solubility in water at 25°C of 30 g/100 mL or more.

(Item 2) The aqueous ink for inkjet recording according to Item 1, wherein the content of the cyclodextrins is 3.0 mass% or more and 21.0 mass% or less relative to the total amount of the aqueous ink for inkjet recording.

(Item 3) The aqueous ink for inkjet recording according to Item 2, wherein the cyclodextrins comprise hydroxypropyl-β-cyclodextrin, and the content of hydroxypropyl-β-cyclodextrin is 5.0 mass% or more and 21.0 mass% or less relative to the total amount of the aqueous ink for inkjet recording.

(Item 4) The aqueous ink for inkjet recording according to Item 3, wherein the content of hydroxypropyl-β-cyclodextrin is 8.0 mass% or more and 18.0 mass% or less relative to the total amount of the aqueous ink for inkjet recording.

(Item 5) The aqueous ink for inkjet recording according to Item 2, wherein the cyclodextrins comprise hydroxypropyl-γ-cyclodextrin, and the content of hydroxypropyl-γ-cyclodextrin is 3.0 mass% or more and 20.0 mass% or less relative to the total amount of the aqueous ink for inkjet recording.

(Item 6) The aqueous ink for inkjet recording according to Item 5, wherein the content of hydroxypropyl-γ-cyclodextrin is 4.0 mass% or more and 16.0 mass% or less relative to the total amount of the aqueous ink for inkjet recording.

(Item 7) An inkjet recording device comprising an ink reservoir, an ink ejection unit, and an aqueous ink stored in the ink reservoir, wherein the aqueous ink comprises gardenia yellow coloring agent, a water-soluble organic solvent, cyclodextrins; and water, wherein the cyclodextrins include seven or more glucose molecules and have a solubility in water at 25°C of 30 g/100 mL or more.

## Claims

1. An aqueous ink for inkjet recording, comprising:
gardenia yellow coloring agent;
a water-soluble organic solvent;
cyclodextrins; and
water,
wherein the cyclodextrins include seven or more glucose molecules and have a solubility in water at 25°C of 30 g/100 mL or more.

2. The aqueous ink for inkjet recording according to claim 1, wherein the content of the cyclodextrins is 3.0 mass% or more and 21.0 mass% or less relative to the total amount of the aqueous ink for inkjet recording.

3. The aqueous ink for inkjet recording according to claim 2, wherein the cyclodextrins comprise hydroxypropyl-β-cyclodextrin, and the content of hydroxypropyl-β-cyclodextrin is 5.0 mass% or more and 21.0 mass% or less relative to the total amount of the aqueous ink for inkjet recording.

4. The aqueous ink for inkjet recording according to claim 3, wherein the content of hydroxypropyl-β-cyclodextrin is 8.0 mass% or more and 18.0 mass% or less relative to the total amount of the aqueous ink for inkjet recording.

5. The aqueous ink for inkjet recording according to claim 2, wherein the cyclodextrins comprise hydroxypropyl-γ-cyclodextrin, and the content of hydroxypropyl-γ-cyclodextrin is 3.0 mass% or more and 20.0 mass% or less relative to the total amount of the aqueous ink for inkjet recording.

6. The aqueous ink for inkjet recording according to claim 5, wherein the content of hydroxypropyl-γ-cyclodextrin is 4.0 mass% or more and 16.0 mass% or less relative to the total amount of the aqueous ink for inkjet recording.

7. An inkjet recording device (10) comprising:
an ink reservoir (2);
an ink ejection unit (3); and
an aqueous ink stored in the ink reservoir (2),
wherein the aqueous ink comprises:
gardenia yellow coloring agent;
a water-soluble organic solvent;
cyclodextrins; and
water,
wherein the cyclodextrins include seven or more glucose molecules and have a solubility in water at 25°C of 30 g/100 mL or more.
